# EUROPÄISCHE PATENTANMELDUNG

(11) **EP 1 343 299 A1**
(43) Veröffentlichungstag der Anmeldung: **10.09.2003**
(21) Anmeldenummer: 03004519.9
(22) Anmeldetag: 28.02.2003
(51) Int. Cl.: H04M 1/02, H04M 1/10

(54) **Telefongerät insbesondere zur Wandmontage**

(30) Priorität: 06.03.2002 DE 20203650 U
(71) Anmelder: GIRA GIERSIEPEN GmbH. & CO. KG., D-42477 Radevormwald (DE)
(72) Erfinder: Heinbach, Hartmut, 57080 Siegen (DE); Dornseiff, André, 42499 Hückeswagen (DE)
(74) Vertreter: Zapf, Christoph, Dipl.-Ing.

(57) **Zusammenfassung**

Die Erfindung betrifft ein Telefongerät (1) insbesondere zur Wandmontage, bestehend aus einem Basisteil (2) und einem Hörer (4). Der Hörer (4) ist in einem aufgelegten Zustand über Haltemittel (8) an dem Basisteil (2) abnehmbar fixiert, wobei Schaltmittel (10) zum selbsttätigen Auslösen bestimmter Schaltfunktionen beim Abheben und Auflegen des Hörers (4) vorgesehen sind. Als Haltemittel (8) ist mindestens eine Haltemagnetanordnung einerseits mit einem Haltemagnetelement (12) und andererseits mit einem magnetisch anziehbaren Gegenelement (14) vorgesehen, und die Schaltmittel (10) weisen mindestens einen zum Schalten sensorisch mit dem Magnetfeld des Haltemagnetelementes (12) zusammenwirkenden Magnetsensorschalter (16, 18) auf.

## Beschreibung

Die vorliegende Erfindung betrifft ein Telefongerät insbesondere zur Wandmontage, bestehend aus einem Basisteil und einem Hörer, wobei der Hörer in einem aufgelegten Zustand über Haltemittel an dem Basisteil abnehmbar fixiert ist, und wobei Schaltmittel zum selbsttätigen Auslösen bestimmter Schaltfunktionen beim Abheben und Auflegen des Hörers vorgesehen sind.

Derartige Telefongeräte können an einer Wand oder einer sonstigen im Wesentlichen vertikalen Montagefläche montiert werden. Um dabei den aufgelegten Hörer gegen Herabfallen zu fixieren, sind Haltemittel vorgesehen, die bei bekannten Geräten oftmals als Rastmittel ausgebildet sind. Dies macht ein sehr genaues Plazieren des Hörers beim Auflegen erforderlich, damit der Hörer auch wirklich sicher verrastet wird. Als Schaltmittel ist in der Regel eine Kontakteinrichtung vorgesehen, die mechanisch mittelbar durch den aufgelegten bzw. abgehobenen Hörer betätigt wird.

Bei einer sehr alten Ausführung eines Wand-Telefons weist das Basisteil ein gabelförmiges Aufnahmeteil auf, in das der Hörer eingehängt werden kann. Dabei ist das Aufnahmeteil beweglich gelagert, um darüber auch die Schaltmittel, den sogenannten Gabelkontakt, zu betätigen. Diese bekannte Ausführung hat vor allem den Nachteil einer großen Bauform und wegen der beweglichen Teile einer relativ hohen Störungsanfälligkeit.

Der vorliegenden Erfindung liegt die Aufgabe zugrunde, ein Telefongerät der genannten Art zu schaffen, welches bei kompakter insbesondere flacher Bauform eine vereinfachte Bedienung ermöglicht und ein hohes Maß an Störungsunanfälligkeit gewährleistet.

Erfindungsgemäß wird dies dadurch erreicht, dass als Haltemittel mindestens eine Haltemagnetanordnung einerseits mit einem Haltemagnetelement und andererseits mit einem magnetisch von diesem anziehbaren Gegenelement vorgesehen ist, und dass die Schaltmittel mindestens einen zum Schalten sensorisch mit dem Magnetfeld des Haltemagnetelementes zusammenwirkenden Magnetsensorschalter aufweisen.

Erfindungsgemäß wird somit der Hörer magnetisch fixiert, was zu einem guten Bedienungskomfort führt, weil der Hörer lediglich an dem Basisteil zur Anlage bzw. Auflage gebracht zu werden braucht, bis das Haltemagnetelement über das magnetisch angezogene Gegenelement den Hörer fixiert. Die Haltemagnetanordnung kann sehr kompakt, insbesondere flachbauend ausgestaltet sein, was demzufolge für das gesamte Telefongerät, d. h. das Basisteil und den Hörer, gilt. Vorteilhafterweise hat dabei das Haltemagnetelement eine Doppelfunktion, indem sein Magnetfeld auch zum Betätigen des als Schaltmittel vorgesehenen Magnetsensorschalters genutzt wird. Als Magnetsensorschalter eignet sich insbesondere ein sogenannter Reed-Kontakt, der vorteilhafterweise auch eine hohe Lebensdauer besitzt.

Weitere vorteilhafte Ausgestaltungsmerkmale der Erfindung sind in den Unteransprüchen sowie der folgenden Beschreibung enthalten.

Anhand eines in der Zeichnung veranschaulichten, bevorzugten Ausführungsbeispiels soll die Erfindung genauer erläutert werden. Dabei zeigen:
- Fig. 1: eine Perspektivansicht auf die Vorderseite eines erfindungsgemäßen Telefongerätes,
- Fig. 2: eine Perspektivansicht analog zu Fig. 1, jedoch in einem geöffneten Zustand des Hörers zur Einsicht auf dessen innere Bestandteile,

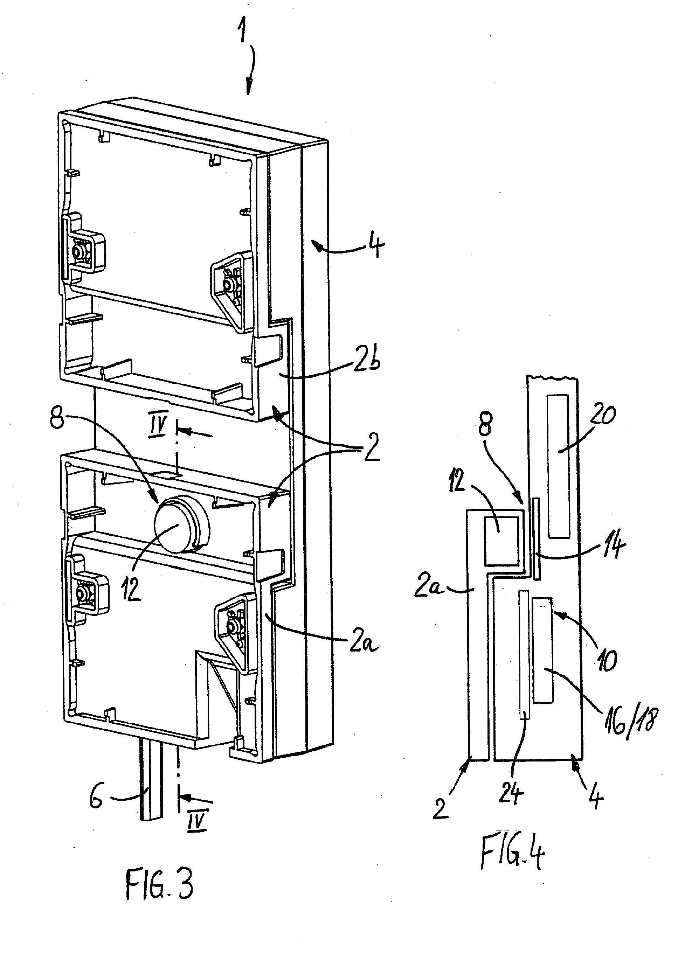

- Fig. 3: eine Perspektivansicht auf die Rückseite des Telefongerätes bzw. auf die Wandmontageseite des Basisteils und
- Fig. 4: einen schematischen Schnitt in der Ebene IV - IV gemäß Fig. 3.

Ein erfindungsgemäßes Telefongerät 1 besteht aus einem wandseitig zu montierenden Basisteil 2 und einem Hörer 4, der in der Fachsprache der Femmeldetechnik auch als Handapparat bezeichnet wird. In der dargestellten Ausführung ist der Hörer 4 über eine nur zum Teil andeutende elektrische Leitungsverbindung 6 mit dem Basisteil 2 verbunden, es kann sich aber grundsätzlich auch um eine drahtlose Ausführung handeln. Weiterhin handelt es sich bei dem Basisteil 2 bevorzugt um eine Unterputz-(UP) - Ausführung, wobei bestimmte Funktionsteile als nicht dargestellte Unterputzeinsätze ausgeführt sind, die in übliche UP-Installationsdosen einsetzbar sind. Bevorzugt sind zwei UP-Einsätze vorgesehen, die als Zweierkombination in zwei über das übliche Installations-Stichmaß von 71 mm mittenbeabstandete UP-Dosen eingesetzt werden. In der Zeichnung sind hauptsächlich zwei zugehörige Aufsatzteile 2a und 2b sowie ein zusätzlicher Wand-Abdeckrahmen 2c des Basisteils 2 veranschaulicht.

Der Hörer 4 ist in seinem aufgelegten Zustand über Haltemittel 8 an dem Basisteil 2 lösbar (abnehmbar) fixiert. Zudem sind Schaltmittel 10 zum selbsttätigen Auslösen bestimmter Schaltfunktionen beim Abheben und Auflegen des Hörers 4 vorgesehen.

Erfindungsgemäß ist als Haltemittel 8 (mindestens) eine Haltemagnetanordnung einerseits mit einem Haltemagnetelement 12 und andererseits mit einem magnetisch anziehbaren Gegenelement 14 vorgesehen. Weiterhin weisen die Schaltmittel 10 erfindungsgemäß mindestens einen zum Schalten sensorisch mit dem Magnetfeld des Haltemagnetelementes 12 zusammenwirkenden Magnetsensorschalter 16 auf. Dazu wird insbesondere auf die Schnittdarstellung in Fig. 4 hingewiesen.

In der dargestellten, bevorzugten Ausführungsform ist das Haltemagnetelement 12 in dem Basisteil 2 angeordnet, während das Gegenelement 14 sowie auch der Magnetsensorschalter 16 in dem Hörer 4 untergebracht sind. Grundsätzlich ist dies aber auch umgekehrt möglich, die bevorzugte Ausführung hat aber den Vorteil, dass beim Telefonieren mit dem in Kopfnähe befindlichen Hörer 4 magnetische Einflüsse auf die Person vermieden werden. Dies ist insbesondere für Träger von Hörgeräten, Herzschrittmachern und dergleichen von Bedeutung.

Der Magnetsensorschalter 16 fungiert insbesondere als sogenannter Gabelschalter, der beim Abheben des Hörers 4 automatisch eine elektrische Verbindung des Telefongerätes 1 bzw. des Basisteils 2 mit einem Telefonanschluß bzw. einer Telefonverbindung (Kabel, Funk oder dergleichen) herstellt.

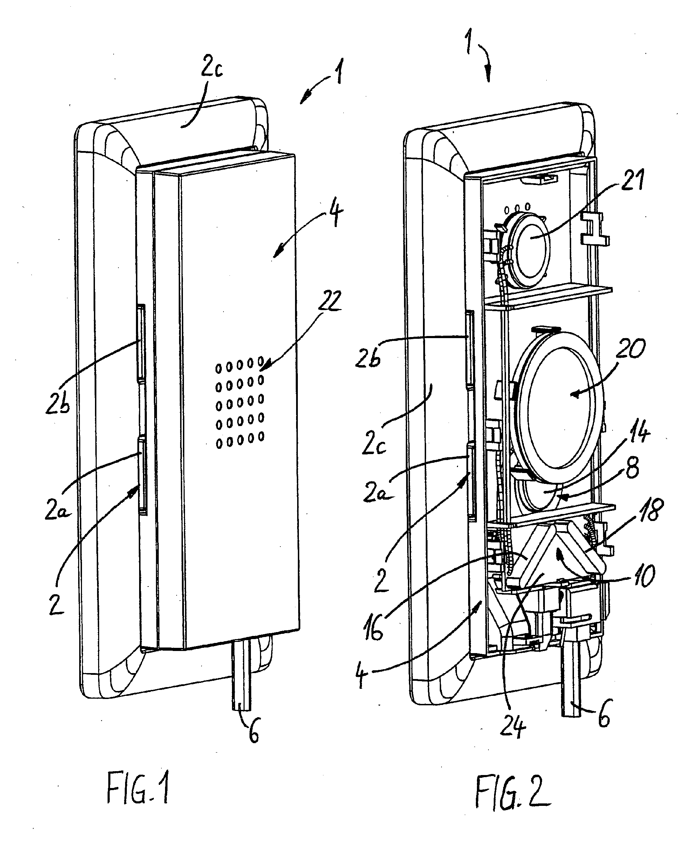

In bevorzugter Ausgestaltung weisen die Schaltmittel 10 noch (mindestens) einen weiteren, zweiten Magnetsensorschalter 18 auf (siehe dazu insbesondere Fig. 2), der ebenfalls mit dem Magnetfeld des selben Haltemagnetelementes 12 zusammenwirkt und hierbei insbesondere als Lautsprecherschalter fungiert und beim Abheben des Hörers 4 automatisch einen Lautsprecher 20 einer Rufton- und/oder Freisprecheinrichtung abschaltet. Vorzugsweise handelt es sich um eine selbsttätige Umschaltung von dem Lautsprecher 20 auf eine interne, sogenannte Hörkapsel 21 (Fig. 2) im Hörer 4. Gemäß Fig. 4 ist der Lautsprecher 20 (vgl. Fig. 2) bevorzugt in dem Hörer 4 untergebracht, der dazu gemäß Fig. 1 auf seiner Rückseite eine Gehäuse-Lochung 22 zum Schallaustritt aufweist.

Das Haltemagnetelement 12 ist bevorzugt von einem geeigneten, beispielsweise knopfförmigen Permanentmagnet gebildet. Das Gegenelement 14 ist von einem vorzugsweisen scheiben- oder plättchenförmigen Teil aus einem ferromagnetischen Material gebildet. In der aufgelegten Position des Hörers gemäß Fig. 4 befindet sich das Gegenelement direkt gegenüber den Haltemagnetelement 12 mit nur geringem Spalt (bedingt durch die Materialstärke des jeweiligen Gehäuses von Basisteil 2 und Hörer 4 und einen eventuellen Luftspalt).

Bevorzugt ist der bzw. jeder Magnetsensorschalter 16, 18 von einem Reed-Kontakt gebildet und derart auf einer Leiterplatte 24 (Fig. 2 und 4) angeordnet, dass er im aufgelegten Zustand des Hörers 4 zur Betätigung in dem Magnetfeld des Haltemagnetelementes 12 liegt. Gemäß Fig. 2 liegen die Reed-Kontakte (16, 18) in etwa radialer Ausrichtung zu dem im Wesentlichen kreis- bzw. zylinderförmigen Haltemagnetelement 12, so dass die bei der bevorzugten Ausführung vorhandenen zwei Magnetsensorschalter 16, 18 in einem bestimmten Winkel zueinander etwa V-förmig angeordnet sind.

Alternativ können als Magnetsensorschalter 16, 18 auch beispielsweise sogenannte Hall-Elemente mit zugehöriger elektronischer Schaltung verwendet werden.

Im Übrigen ist die Erfindung ohnehin nicht auf das dargestellte und beschriebene Ausführungsbeispiel beschränkt, sondern umfaßt auch alle im Sinne der Erfindung gleichwirkenden Ausführungen.

## Patentansprüche

1. Telefongerät (1) insbesondere zur Wandmontage, bestehend aus einem Basisteil (2) und einem Hörer (4), wobei der Hörer (4) in einem aufgelegten Zustand über Haltemittel (8) an dem Basisteil (2) abnehmbar fixiert ist, und wobei Schaltmittel (10) zum selbsttätigen Auslösen bestimmter Schaltfunktionen beim Abheben und Auflegen des Hörers (4) vorgesehen sind,
**dadurch gekennzeichnet, dass** als Haltemittel (8) mindestens eine Haltemagnetanordnung einerseits mit einem Haltemagnetelement (12) und andererseits mit einem magnetisch anziehbaren Gegenelement (14) vorgesehen ist, und dass die Schaltmittel (10) mindestens einen zum Schalten sensorisch mit dem Magnetfeld des Haltemagnetelementes (12) zusammenwirkenden Magnetsensorschalter (16, 18) aufweisen.

2. Telefongerät nach Anspruch 1,
**dadurch gekennzeichnet, dass** das Haltemagnetelement (12) in dem Basisteil (2) und das Gegenelement (14) sowie auch der Magnetsensorschalter (16, 18) in dem Hörer (4) angeordnet sind.

3. Telefongerät nach Anspruch 1 oder 2,
**dadurch gekennzeichnet, dass** der Magnetsensorschalter (16) als sogenannter Gabelschalter fungiert, der beim Abheben des Hörers (4) automatisch eine elektrische Verbindung mit einem Telefonanschluß herstellt.

4. Telefongerät nach einem der Ansprüche 1 bis 3,
**dadurch gekennzeichnet, dass** die Schaltmittel (10) einen weiteren, zweiten, ebenfalls zum Schalten sensorisch mit dem Magnetfeld des Haltemagnetelementes (12) zusammenwirkenden Magnetsensorschalter (18) aufweisen, wobei dieser zweite Magnetsensorschalter (18) insbesondere als Lautsprecherschalter fungiert und beim Abheben des Hörers (4) automatisch einen Lautsprecher (20) einer Rufton- und/oder Freisprecheinrichtung abschaltet.

5. Telefongerät nach einem der Ansprüche 1 bis 4,
**dadurch gekennzeichnet, dass** das Haltemagnetelement (12) von einem Permanentmagnet gebildet ist.

6. Telefongerät nach einem der Ansprüche 1 bis 5,
**dadurch gekennzeichnet, dass** das Gegenelement (14) von einem vorzugsweise scheiben- oder plättchenförmigen Teil aus einem ferromagnetischen Material gebildet ist.

7. Telefongerät nach einem der Ansprüche 1 bis 6,
**dadurch gekennzeichnet, dass** der bzw. jeder Magnetsensorschalter (16, 18) von einem Reed-Kontakt gebildet und derart angeordnet ist, dass er im aufgelegten Zustand des Hörers (4) zur Betätigung im Magnetfeld des Haltemagnetelementes (12) liegt.
